Europäisches Patentamt

European Patent Office

Office européen des brevets

(11) Publication number: **0 116 019**
**A1**

# EUROPEAN PATENT APPLICATION

(21) Application number: **84850001.3**

(22) Date of filing: **02.01.84**

(51) Int. Cl.³: **B 29 C 27/04**

(30) Priority: **04.01.83 SE 8300027**

(43) Date of publication of application: **15.08.84**
**Bulletin 84/33**

(84) Designated Contracting States: **AT BE CH DE FR GB LI LU NL**

(71) Applicant: **FIAB SYSTEM AB, S-453 00 Lysekil (SE)**

(72) Inventor: **Niklasson, Tage, Fregattvägen 8, S-453 00 Lysekil (SE)**

(74) Representative: **Mossmark, Anders et al, Patentbyran WEST-PATENT AB Stora Nygatan 15, S-411 08 Göteborg (SE)**

(54) A method of joining preferably tubular bodies end-to-end and an apparatus for performing the method.

(57) A method and an apparatus for end-to-end joining of preferably tubular bodies (1, 2) of a material which lends itself to melting by a high-frequency electric field, preferably polyvinyl chloride. The two bodies (1, 2) are placed in juxtaposed position with the end faces (25) to be joined in facing relationship and their end parts are enclosed in a conductive jaw (15, 18/16, 19) or similar tool which is connected to a high-frequency electric current generator. A high-frequency electric field is created between the jaws in the area of the joint. A sleeve-shaped body (26) is provided to support the walls of the bodies, so that the high-frequency electric field effects welding-together of the joint faces while retaining the shape of the bodies.

1663.40 TH/AECAG
1983-12-27

## A Method of Joining Preferably Tubular Bodies End-to-End and An Apparatus for Performing the Method

The subject invention concerns a method of joining end-to-end preferably tubular bodies consisting of a material which may be melted by a high-frequency electric field such as tubes or pipes of a thermoplastic material. The invention also concerns an apparatus for performing the method. More precisely the invention concerns joining of tubes and hoses by interconnecting the tubes or hose ends without using coupling means of a type that need to be screwed together.

In many instances when it is necessary to interconnect tubes or hoses it is desirable to avoid using coupling means as such means always involve costs both in manufacture and assembly while at the same time some risk of leakage is unavoidable. Consequently, if one wishes to avoid using coupling means one has to resort to methods of direct interconnection of the tube or hose ends. In tubes or hoses of plastics the joints could be interconnected by glueing or welding through supply of external heat or heat generated by friction from rotation or ultrasonics. The glueing method is not always suitable, since it involves addition of foreign matter while on the other hand heating by means of an external source of heat tends to give inadequate joints due to too extensive melting of the material. The method of heating by rotation cannot always be used and if so, essentially only in comparatively short rigid tubes but not in the case of hoses.

The drawbacks outlined above have made themselves felt particularly in medical applications. For example in the manufacture of infusion or drip bags it is sometimes necessary to join the hose associated with the bag and since neither the use of coupling means nor the method of joining with the aid of external heat or friction have proved to be suitable the glue-joining method must be resorted to. Inevitably, however, some of the glue or, in case the hose material

2

0116019

proper is used as the adhesive, the adhesive solvent becomes trapped inside the hose and consequently it is entrained by the infusion liquid into the body of the patient. This is obviously unsatisfactory and under unhappy circumstances may cause injuries.

The purpose of the subject invention is to provide a new method of joining tubes or hoses of certain kinds of plastics material, ensuring that the joining operation may be effected quickly and conveniently at low costs while using the tube or hose material proper.

A further purpose of the invention is to provide an apparatus for performing the method.

The method in accordance with the invention is characterized by arranging the two bodies which are to be joined in juxtaposed position with their end faces to be joined in facing relationship, enclosing the end part of each body in a conductive jaw or equivalent tool, connecting the jaws to a high-frequency electric current generator, whereby a high-frequency electric field is generated between the jaws in the area of the joint, and arranging a sleeve-shaped body to support the walls of the bodies in such a manner that the high-frequency electric field effects the welding-together of the joint faces while essentially retaining the shape of the bodies.

The apparatus of the subject invention is characterized in that it comprises a first jaw of a conductive material having an aperture formed therein for reception of one of the bodies, and a second jaw of a conductive material having an aperture formed therein for reception of the second one of the bodies, the arrangement being such that the end faces of said bodies which are to be joined abut in the area between the jaws, each one of said jaws arranged to be connected to its associated one of the two outputs of a high-frequency electric current generator, a sleeve-shaped body being arranged to extend along the walls of said bodies so as to overlap the joint area.

The invention will be described in closer detail in the following with reference to one embodiment shown in the accompanying drawing, wherein

Fig. 1 is a cross-sectional view of the apparatus along line I-I of Fig. 2,

Fig. 2 is a lateral view of the apparatus of Fig. 1 shown on a smaller scale, and

0116019

Fig. 3 is a view showing a detail of another embodiment of the apparatus.

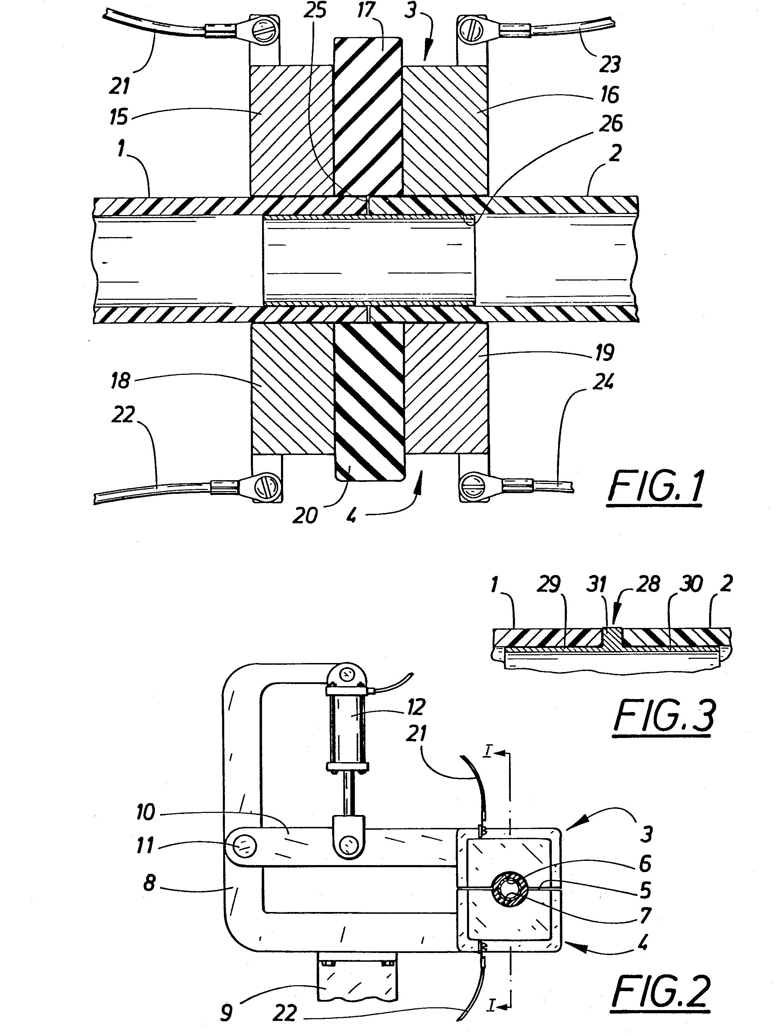

A tool for joining two hose sections 1 and 2 comprises an upper jaw 3 and a lower jaw 4. The jaws 3 and 4 meet or extend close to one another along a parting line 5. A semi-circular recess 6 and 7 is formed in each jaw 3 and 4, said recesses extending from the parting line 5 into their associated one of the jaws and together they form a circular bore through the interior of the jaws when the latter are in juxtaposed or closed position. The diameter of the bore is dimensioned to ensure that the walls of the jaws abut against the hose portions in said recesses 6 and 7 while exerting a certain pressure on said hose portions when the latter are inserted in the bore in the manner appearing from Fig. 1.

As appears from Fig. 2 the lower jaw 4 is stationary and supported on a stand 8 which in turn is supported by a base 9 shown only in part. The upper jaw 3 is supported by an arm 10 which is pivotally mounted about a shaft 11 journalled in the stand 8. The arm 10 and thus the jaw 3 supported thereon may be pivoted by means of a pneumatic ally operated power unit 12 towards and away from the lower, stationary jaw 4. As a result, the jaws may be moved apart for convenient introduction of the hose portions 2 and 3. When the jaws are closed to the position illustrated in the drawing figures they will clamp the hose portions 1 and 2 in position as already mentioned.

The jaw 3 consists of three plates, viz. two outer metal plates 15 and 16 and an intermediate insulating plate 17. The lower jaw 4 similarly comprises two outer metal plates 18, 19 and an intermediate insulating plate 20. The bore formed by the recesses 6, 7 extends straight through all three plates of both jaws. As appears from Fig. 1, the plates of the two jaws are aligned, and thus the jaws are arranged in centered relationship. Owing to this arrangement the tool could be described as one consisting of a first outer, divided plate 15, 18, a second outer, divided plate 16, 19, which plates are conductive, and an intermediate, likewise divided plate 17, 20 which is insulating. To effect interconnection of the hose portions 1 and 2 the two electrodes of the tool must be connected to their respective one of the outputs of a high-frequency electric current generator.

This is done by means of wires 21 and 22 which are associated with metal plates 15 and 18 and by means of wires 23 and 23 which are associated with metal plates 16, 19. Thus, wires 21 and 22 are connected to one of the two generator outputs and wires 23 and 24 are connected to the other generator output. Through this arrangement, the plates 15 and 18 could be regarded as a unit forming one electrode and the plates 16, 19 another unit forming the second electrode. Electrically, the fact that the tool is partitioned therefore is without importance. The two electrodes are isolated from each other by means of the plates 17, 20 forming the insulating member.

As appears from Fig. 1, the hose portions 1 and 2 are to be placed in the tool so as to ensure that the joint 25 will be positioned on the centre line through the two plates 17, 20 forming the insulator. The purpose therefor is to allow the high-frequency field which is generated between the two pairs of plates, 15, 18 and 16, 19, respectively, to heat the plastic material of the hose portions 1, 2 sufficiently to weld the joint. To effect this, it is necessary that the plastics material is of a type wherein the atoms are agitated by the high frequency electrical field. Polyvinyl chloride possesses this property and is the material most commonly used in connection with high-frequency welding. However, this type of welding is generally used to interconnect foils in superposed relationship. In this case the electrodes are positioned on either side of the superposed foils and the high frequency electric field therefore extends between the electrodes directly through the material. In the present case, on the other hand, the electrodes are juxtaposed and experience shows that the field will not be directed in such a manner as to give a satisfactory weld joint.

In accordance with the teachings of the subject invention this problem is solved by introduction into the hose portions 1, 2 of a nipple 26 which overlaps the joint 25. The nipple is intended to direct the field in such a manner that the material surrounding the joint 25 is heated and the hose portions 1, 2 welded together. Preferably, the nipple material is metal. However, in case it is undesirable to use metal in the hose it is possible to use non-conductive materials for the purpose, provided a thin surface layer of a conductive material is applied thereon. It is therefore quite possible to use a plastics nipple which has been metallized, preferably on the external face which is in contact with the hose.

The purpose of using a nipple of metal or one having a metal surface layer applied thereon thus is to direct the high-frequency electrical field in a manner ensuring that this electric field passes through the plastic components which are to be welded together. This is achieved by routing the field between the two plates 15, 18 and 16, 19 by way of the conductive sleeve 26. However, an electric field is generated between the plates also when no metal piece is positioned between them. It is likewise possible to reinforce this field in the area between the plates by shifting the plate connections in such a manner that cross-wise positioned plate pairs form the respective pole. When this is the case the plates 15 and 19 thus should be connected to the same output connection of the high-frequency generator while plates 16 and 18 should be connected to the other generator output connection. The field formed through this arrangement is not, however, as clearly defined as a field formed with the aid of a metal component. Under certain circumstances, for example when the amount of material used in the two hoses or pipes to be welded together is very small, the field generated in the manner indicated above may be sufficient to melt the material in the joint area. However, under these conditions no reliable weld interconnection of the parts could be expected and introduction of a nipple similar to nipple 26 still is required. The difference is, however, that the latter need not be conductive, provided a sufficiently strong electric field is generated under the circumstances referred to effect melting of the parts to be welded together. In other words, the nipple 26 can be all plastics nipple and thus forms a support to the hose or tube portions 1, 2 during the welding operation. In this manner the latter retain their main shape and a well defined tight weld is obtained.

Fig. 3 shows a particularly advantageous embodiment of a non-conductive nipple of this kind. In this embodiment the nipple has received numeral reference 28 and is formed with two end members 29 and 30 on which are mounted the hose portions or tube portions 1, 2 and with a central flange 31 against which the ends of the tube portions abut.

6

0116019

As should be apparent from the above description the welding operation for interconnecting the two hose portions 1, 2 is effected by pushing the hose portions onto the nipple 26 until the hose ends 25 abut. Thereafter, the jaws 3 and 4 are moved apart by activating the mechanism 12, the latter preferably being operated hydraulically, whereafter the hose portions are inserted into the lower recess 7. The jaws are thereafter closed by again operating the mechanism 12 and high-frequency current is fed to the electrodes. The high-frequency electric field which is generated in consequence thereof flows through the hose portions and is concentrated about the faces of the joint 25 by the nipple 26, whereby these faces are welded together. In the embodiment using the nipple 28 the ends of the portions 1, 2 fuse with the flange 31 on the nipple 28.

When the welding operation is completed, the current is disconnected and the jaws are again opened allowing removal of the now welded hose. The hose ends thus have been joined without addition of any foreign matter such as glue or solvents.

The embodiment of the tool shown in the drawings is to be regarded as an example only. Within the scope of the appended claims the construction could be varied in many ways, for example as regards the jaw-opening mechanism. The configuration must be adapted to the parts which are to be joined and in addition to round tubes and hoses other cross-sectional shapes could be joined as taught by the subject invention. It is possible to construct the nipple as an external sleeve enclosing the body to be welded together. This method is applicable also for interconnection of homogeneous, non-tubular bodies such as rods and profiles.

1663.40 TH/AECAG
1983-12-27

Claims:

1.  A method of joining end-to-end preferably tubular bodies consisting of a material which may be melted by a high-frequency electric field, such as tubes (1, 2) or pipes of a thermoplastic material, preferably polyvinyl chloride, CHARACTERIZED by arranging the two bodies (1, 2) which are to be joined in juxtaposed position with their end faces (25) to be joined in facing relationship, enclosing the end part of each body in a conductive jaw (15,18/16,19) or equivalent tool, connecting the jaws to a high-frequency electric current generator, whereby a high-frequency electric field is generated between the jaws in the area of the joint, and arranging a sleeve-shaped body (26; 28) to support the walls of the bodies (1, 2) in such a manner that the high-frequency electric field effects the welding-together of the joint faces while essentially retaining the shape of the bodies.

2.  A method according to claim 1, CHARACTERIZED by the fact that the bodies (1, 2) are tubular and that the sleeve-shaped body is a nipple (26; 28) which is positioned inside the bodies.

3.  A method as claimed in claim 1 or 2, CHARACTERIZED by the fact that an electrically conductive material is used as the material for the sleeve-shaped body (26) in order to direct the high-frequency electric field.

4.  A method as claimed in claim 1, 2 or 3, CHARACTERIZED by the fact that the jaws (15,18/16,19) are so partitioned and connected to the high-frequency electric current generator that the field extends crosswise through the joint area from one side of one of the jaws to the other side of the other jaw and vice versa.

5.  An apparatus for performing the method in accordance with any one of claims 1-4 and designed to join end-to-end preferably tubular bodies (1, 2) of a material which may be melted by a high-frequency electric field, such as a plastics material, preferably polyvinyl chloride, CHARACTERIZED by a first jaw (15, 18) of a conductive material having an aperture formed therein for reception of one (1) of

0116019

the bodies, and a second jaw (16, 19) of a conductive material having an aperture formed therein for reception of the second one (2) of the bodies, the arrangement being such that the end faces (25) of said bodies which are to be joined abut in the area between the jaws, each one of said jaws arranged to be connected to its associated one of the two outputs of a high-frequency electric current generator, a sleeve-shaped body (26) being arranged to extend along the walls of said bodies so as to overlap the joint area.

6. An apparatus as claimed in claim 5, CHARACTERIZED by the fact that the jaws (15,18/16,19) are partitioned, allowing them to be opened for introduction thereinto of the bodies (1, 2) and closed for the joining operation.

7. An apparatus as claimed in claim 6, CHARACTERIZED by the fact that one (15, 18) of the jaws is connected to one of the outputs of the generator and the other jaw (16, 19) is connected to the other one of the generator outputs, whereby a linear field is created between the jaws.

8. An apparatus as claimed in claim 6, CHARACTERIZED by the fact that the parts (15, 16) of the jaws (15,18/16,19) which are positioned on one side of the bodies are connected to one of the outputs of the generator whereas the opposite parts (18, 19) of the jaws are connected to the other generator output, whereby the component parts of each jaw will be insulated from each other so that a cross-wise extending, high-frequency electric field is created.

1/1

0116019

*FIG.1*

*FIG.3*

*FIG.2*

| | **DOCUMENTS CONSIDERED TO BE RELEVANT** | | EP 84850001.3 |
|---|---|---|---|
| Category | Citation of document with indication, where appropriate, of relevant passages | Relevant to claim | CLASSIFICATION OF THE APPLICATION (Int. Cl. ³) |
| A | GB - A - 1 344 411 (HELLER) <br> * Totality * <br> -- | 1-4,7 | B 29 C 27/04 |
| A | DE - C - 904 334 (LORENZ) <br> * Totality * <br> -- | 1 | |
| A | AT - B - 190 273 (HATSCHEK) <br> * Totality * <br> -- | 1 | |
| A | DE - A1 - 2 455 503 (AKTIEBOLAGET ATOMENERGI) <br> * Totality * <br> -- | 1 | |
| A | DE - B - 1 479 232 (HOECHST) <br> * Totality * <br> -- | | TECHNICAL FIELDS SEARCHED (Int. Cl. ³) |
| A | DE - B2 - 2 332 174 (WIDOS) <br> * Totality * <br> ---- | | B 29 C |

The present search report has been drawn up for all claims

| Place of search | Date of completion of the search | Examiner |
|---|---|---|
| VIENNA | 23-03-1984 | MAYER |